# EUROPÄISCHE PATENTSCHRIFT

(11) **EP 1 469 955 B1**
(45) Veröffentlichungstag und Bekanntmachung des Hinweises auf die Patenterteilung: **20.08.2008**
(21) Anmeldenummer: 03731621.3
(22) Anmeldetag: 17.01.2003
(51) Int. Cl.: B21B 38/02, G01B 7/34, G01L 5/10

(54) **VOLLROLLE ZUM FESTSTELLEN VON PLANHEITSABWEICHUNGEN**
ROLLER FOR DETERMINING VARIATIONS IN FLATNESS
ROULEAU PLEIN PERMETTANT DE DETERMINER LES CARTS DE PLANEITE

(30) Priorität: 22.01.2002 DE 10207501
(43) Veröffentlichungstag der Anmeldung: 27.10.2004
(73) Patentinhaber: Betriebsforschungsinstitut VDEh Institut für angewandte Forschung GmbH, 40237 Düsseldorf (DE)
(72) Erfinder: MÜCKE, Gerd, 40724 Hilden (DE); NEUSCHÜTZ, Eberhard, 40880 Ratingen (DE)
(74) Vertreter: König, Gregor Sebastian
(86) Internationale Anmeldenummer: PCT/EP2003/000432
(87) Internationale Veröffentlichungsnummer: WO 2003/061865

(56) Entgegenhaltungen:
- EP-A- 0 315 043
- DE-A- 3 831 331
- DE-A- 4 236 657
- DE-A- 19 616 980
- DE-A- 19 838 457
- US-A- 3 362 203

## Beschreibung

Die Erfindung bezieht sich auf eine Vollrolle zum Feststellen von Planheitsabweichungen beim Behandeln von bandförmigem Gut gemäß dem Ober begriff des Patentanspruchs 1.

Solche Vollrollen werden beim Kalt- und Warmwalzen von Metallband eingesetzt und sind beispielsweise aus der DE 42 36 657 A1 bekannt.

Für das herkömmliche Messen der Planheit beim Walzen von Bändern werden im wesentlichen Verfahren eingesetzt, bei denen das Band mit einem gewissen Umschlingungswinkel über eine mit Sensoren bestückte Meßrolle geführt wird.

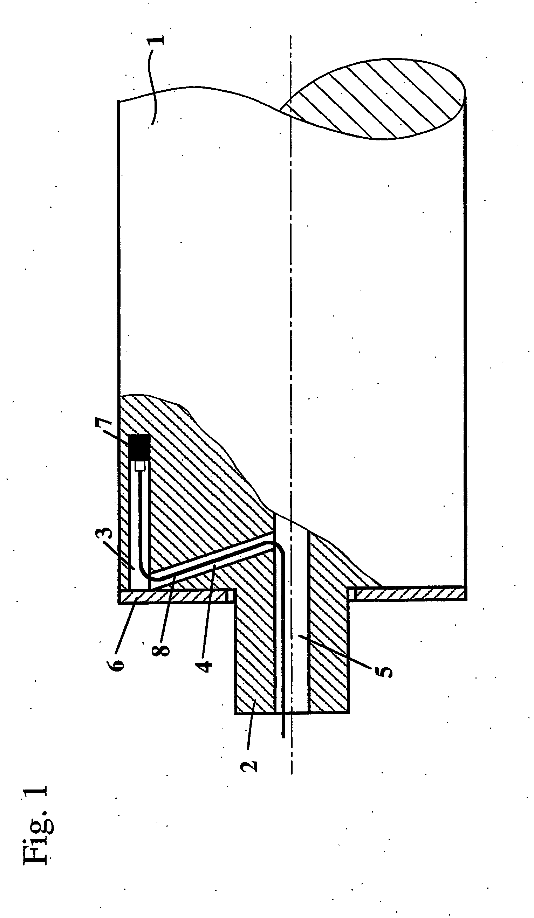

Auf diese Weise kommt es bei der in der DE 42 36 657 A1 beschriebenen Meßrolle zu einer Berührung zwischen Kraftmeßgebern oder deren Abdeckungen, die in zur Rollenoberfläche offenen radialen Bohrungen der Meßrolle angeordnet sind, und dem Band. Zwischen den am Boden ihrer Ausnehmung aufgespannten Sensoren und der sie umgebenden Bohrungswandung befindet sich ein zylindrischer Spalt. Dieser Spalt kann mit einem O-Ring schulterdichtend oder mit einer Kunststoffschicht frontdichtend verschlossen sein, um das Eindringen von Schmutz, beispielsweise Bandabrieb und Schmiermittel in die Ringspalte zwischen Sensor und Rollenkorpus zu verhindern. Auch ist es möglich, wie in der D 42 36 657 A1 in der Figur 1c dargestellt ist, den Meßgeber in eine Ausnehmung der Vollrolle zu platzieren, die dann mit einer angearbeiteten Membran abgedeckt wird.

Die Anordnung der Sensoren (Kraftmeßgeber) mit Abstand von der sie umgebenden Wandung und das Verschließen des Ringspalts mit Hilfe eines O-Rings oder eines hinreichend elastischen Kunststoffs (DE 196 16 980 A1) verhindert, daß sich während des Walzens im Korpus der Rolle wirksame Querkräfte störend auf die Kraftmeßgeber bzw. das Meßergebnis auswirken. Derartige Störkräfte sind die Folge des auf die Meßrolle wirkenden Bandzugs und einer damit verbundenen Durchbiegung der Rolle. Deren Querschnitt nimmt dabei die Form einer Ellipse an, deren längere Achse parallel zum Band verläuft. Die Rollendurchbiegung täuscht dem Kraftmeßgeber eine Unebenheit des Bandes vor, wenn sie durch Kraftnebenschluß auf den Meßgeber übertragen wird. Ein solcher Kraftnebenschluß läßt sich bei der Verwendung einer Dichtung im Ringspalt nicht ganz vermeiden, da die Dichtkräfte zwangsläufig auf den Sensor wirken.

Aus der DE 198 38 457 A1 ist auch bereits eine Meßrolle mit einem die Rollenoberfläche überdeckenden geschlossenen Mantel in Gestalt eines Rohrs bekannt. Bei dieser Meßrolle sind die Sensoren ebenfalls in radial offenen Bohrungen angeordnet bzw. eingespannt. Es ist jedoch schwierig, ein solches Mantelrohr auf die mit den Meßgebern bestückte Rolle aufzubringen. Dies geschieht im allgemeinen durch Aufschrumpfen eines zuvor erwärmten Rohres. Das bringt jedoch die Gefahr einer Beschädigung der Sensoren (Meßgeber) durch die Wärme des Rohres mit sich. Die bekannten Sensoren arbeiten nämlich üblicherweise mit einem piezoelektrischen Quarz, an dessen Kristalloberfläche die zu messende Kraft Ladungen erzeugt, die als Meßgröße dienen. Derartige Sensoren besitzen zwar eine hohe Anspruchsempfindlichkeit, eine hohe Eigenfrequenz und Stabilität bei geringen Abmessungen und ermöglichen es, Anfangslasten ohne Beeinträchtigung des Meßergebnisses zu kompensieren. Sie sind jedoch Temperaturen über etwa 200°C nicht gewachsen, weil sich bei höheren Temperaturen von der zu messenden Kraft induzierte Ladung ergibt, die je nach Dauer der Temperaturbelastung erhalten bleibt und so zu einer Verfälschung des Meßergebnisses führt. Piezoelektrische Sensoren eignen sich daher ohne besondere Maßnahmen weder für das Warmaufschrumpfen eines Mantelrohrs noch für das Messen der Druckverteilung beim Warmbandwalzen.

Außerdem ist beim Aufschrumpfen eines erwärmten Rohrs eine Oberflächenbearbeitung des Mantelrohres erforderlich. Ähnliche Probleme ergeben sich, wenn nicht ein Mantelrohr, sondern eine Vielzahl von Mantelringen auf dem Walzenkorpus aufgeschrumpft werden. Hinzu kommt, daß sich an den Stoßstellen der Ringe kleine umlaufende Rillen bilden können, die zu einer Beeinträchtigung der Oberflächenqualität des über die Meßrolle geführten Bandes führen können.

Ein weiterer Nachteil der Verwendung von Mantelrohren oder -ringen ergibt sich aus der im Vergleich zum Korpus der Rolle unterschiedlichen Durchbiegung und Wärmedehnung, die zu unerwünschten inneren Spannungen sowie zum Lösen der Mantelrolle oder der Mantelringe führen können.

Die bekannten Meßrollen weisen - unabhängig von der Art und der Anordnung der Sensoren in den radialen Rollenbohrungen - den Nachteil auf, daß die Verwendung eines O-Rings oder das Verschließen des etwa 0,05 mm breiten Ringspalts mit einem elastischen Kunststoff aufwendig ist und letztendlich auch nicht eine völlig geschlossene Rollenoberfläche ergibt. Außerdem besteht bereits bei Temperaturen über etwa 230°Celsius die Gefahr, daß der O-Ring oder die Kunststoffüllung zerstört wird und dann metallischer Abrieb und/oder Schmiermittel in den Ringspalt eindringt.

Darüber hinaus ergibt sich die Gefahr, daß bei dem üblichen abschließenden Abschleifen der Meßrolle hohe Schleiftemperaturen auftreten können, die bei den Deckeln, mit denen die Sensoren üblicherweise versehen sind, zu einer Gefügeumwandlung führen können. Die Schleiftemperaturen müssen daher niedrig gehalten werden.

Schließlich besteht die Notwendigkeit, die Verschleißfestigkeit der Meßrollen durch ein Oberflächen härten zu verbessern. Da es bei dem mit einem Härten verbundenen Erwärmen und abschließenden Abschrecken der Rollenoberfläche leicht zu Spannungsrissen kommen kann, werden die Rollen üblicherweise zunächst gehärtet und anschließend die Bohrungen für die Sensoren eingebracht. Dies bedingt angesichts der Notwendigkeit von Spezialwerkzeugen für das Bohren hohe Fertigungskosten.

Der Erfindung liegt daher das Problem zugrunde, bei einer Vollrolle der eingangs genannten Art die von dem Vorhandensein eines Ringspalts an der Rollenoberfläche bedingten Schwierigkeiten zu vermeiden, ohne dabei ein Mantelrohr oder Mantelringe verwenden zu müssen.

Diese Aufgabe wird durch die kennzeichnenden Merkmale im Anspruch 1 gelöst.

Bei den Ausnehmungen kann es sich um Bohrungen oder auch um beispielsweise durch Senkerodieren hergestellte Kanäle mit quadratischem Querschnitt handeln. Der Begriff Bohrungen schließt daher im folgenden alle in Frage kommenden Querschnitte und Verfahren zu deren Herstellung ein.

Die axiale Zugänglichkeit der Ausnehmungen für die Sensoren ist beispielsweise bei einer Rolle mit achsparallelen Bohrungen gegeben, die von Stirnseite zu Stirnseite verlaufen, oder als Sackbohrungen ausgebildet sind. Die Sensoren lassen sich dann von der Stirnseite her ein den Bohrungen mit unterschiedlicher Tiefe plazieren, so daß einzelne Sensoren in nebeneinander liegenden Bohrungen gestaffelt auf einer sich über die gesamte Rollenbreite erstreckenden Schraubenlinie angeordnet sind. Es lassen sich jedoch auch mehrere Sensoren in einer Bohrung mit Abstand voneinander anordnen.

Die Sensoren sollten in den Bohrungen fixiert bzw. verspannt sein, beispielsweise verkeilt. Treten beim Verspannen unterschiedliche Vorspannunden auf, lassen sich diese ohne weiteres meßtechnisch kompensieren. Andererseits läßt sich die Vorspannung jedoch auch bewußt dosieren, um Fertigungstoleranzen sowohl der Sensoren als auch der Bohrungen auszugleichen. Dabei können Sensoren mit planparallelen Flächen zwischen keilförmigen Haltestücken, beispielsweise Spannkeilen angeordnet sein, die solange gegeneinander bewegt werden, bis der Sensor unverrückbar zwischen den Haltestücken eingeklemmt ist.

Eines der beiden Haltestücke ist normalerweise dort, wo der Sensor plaziert werden soll, ortsfest in der Bohrung angeordnet, während das andere Haltestück zum Fixieren des Sensors in der Bohrung verschoben wird. Dies kann mit Hilfe einer Spannschraube geschehen, die sich am Rollenkorpus abstützt und über eine Distanzhülse auf das bewegliche Haltestück wirkt.

Besonders günstig ist die Anordnung mehrerer Sensoren in radial beweglichen Schiebestücken, die mit Hilfe einer Keilleiste in der Bohrung fixiert werden. Die Schiebestücke können in einer Distanzleiste angeordnet sein und mit Hilfe keilförmiger Haltenasen einer Spannleiste radial nach außen gedrückt und so in der Vollrolle verspannt werden.

Um die zu den Sensoren führenden Leitungen sicher unterzubringen, können die Bohrungen mit parallel vedaufenden Leitungskanälen verbunden sein. Alternativ können die Bohrungen jedoch auch über einen Querkanal mit einer zentrischen Kabelbohrung in der Rolle verbunden sein. Der Querkanal kann im Korpus der Rolle verlaufen oder als offener Kanal an der Stirnfläche der Rolle und dann mit einem Deckel verschlossen sein.

Um die Haltestücke für die Sensoren oder die Leisten in den Bohrungen zu führen, können sie mit einer Längsrippe versehen sein, die in eine komplementäre Führungsnut im Korpus der Rolle eingreift.

Wenn die achsparallelen Bohrungen mit geringem Abstand von beispielsweise 1 bis 30 mm, vorzugsweise 5 bis 10 mm unterhalb der Rollenobertläche angeordnet sind, dann ergibt sich über den eingespannten Sensoren ein dünner Biegebalken, der sich je geringer seine Dicke ist um so günstiger auf das Meßergebnis auswirkt, weil er praktisch keine oder allenfalls äußert geringe Querkräfte aufnimmt.

Ein besonderer Vorteil der erfindungsgemäßen Vollrolle ergibt sich daraus, daß der Rollenkörper nur zwei Bearbeitungsschritte erfordert, und zwar einerseits das Einbringen der Längsbohrungen bzw. -kanäle und zum anderen das Plazieren der Sensoren in ihren, Bohrungen. Dabei lassen sich die achsparallelen Bohrungen (Ausnehmungen) mit verhältnismäßig geringem Fertigungsaufwand vor dem Härten in den Korpus der Rolle einbringen. Auf diese Weise entsteht eine einstückige Meßrolle mit völlig geschlossener Mantelfläche und daher ohne das Meßergebnis verfälschende oder die Oberflächenqualität des Bandmaterials beeinträchtigende Verschmutzungen. Außerdem ist mit der geschlossenen Oberfläche der Vorteil verbunden, daß sich die Rolle, z.B. auch als Arbeitswalze, beispielsweise beim Kaltoder Warmwalzen von Metallband einsetzen läßt.

Die in sich geschlossene Rollenoberfläche erlaubt ein Beschichten der Mantelfläche mit verschleißfesten metallischen oder nichtmetallischen bzw. keramischen Werkstoffen, beispielsweise mit Wolfram, Molybdän und Tantal sowie deren Legierungen oder mit Karbiden, Nitriden, Boriden, Siliziden und Oxiden. Des weiteren läßt sich die Mantelfläche oder auch die Beschichtung mit einer Textur versehen, um die Oberfläche des über die Rolle geführten bahnförmigen Material zu strukturieren.

Die Erfindung wird nachfolgend anhand von in der Zeichnung dargestellten Ausführungsbeispielen des näheren erläutert. In der Zeichnung zeigen:
- Fig. 1: die Seitenansicht einer Meßrolle teilweise im Schnitt,
- Fig. 2: eine Meßrolle mit Kabelkanälen in perspektivischer Darstellung,
- Fig. 3: einen Ausschnitt einer Stirnansicht der Meßrolle gemäß Fig. 2,
- Fig. 4: eine Meßrolle mit einer Axialbohrung mit darin radial eingespanntem Sensor,
- Fig. 5: die perspektivische Ansicht einer Meßrolle mit längs einer Schraubenlinie angeordneten gestaffelten Sensoren :
- Fig. 6: eine Meßrolle mit zwei einander gegenüberliegenden Sensoren,
- Fig. 7: einen Teil einer Rolle mit einem Sensor in einem mehrteiligen Gehäuse,
- Fig 8: eine Draufsicht auf die Bohrung gemäß Fig. 7,
- Fig. 9: eine Distanzleiste in Verbindung mit einer zugehörigen Keilleiste vor dem Verspannen der Sensoren,
- Fig. 10: die beiden Leisten der Fig. 9 mit den verspannten Sensoren,
- Fig. 11: eine Meßrolle mit den beiden Leisten in der Situation gemäß Fig. 10 und
- Fig. 12: eine stirnseitige Draufsicht auf einen Teil der Rolle gemäß Fig. 11 mit einer im Querschnitt rechteckigen Ausnehmung.

Die erfindungsgemäße Meßrolle 1 mit einem Zapfen 2 besitzt dicht unter ihrer Oberfläche kreisförmig angeordnete achsparallele Bohrungen 3, von denen nahe an ihrer Stirnseite Querkanäle 4 abgehen und zu einem zentrischen Kabelkanal 5 führen. Die Bohrungen sind mit einem Deckel 6 oder jeweils einzeln mit Deckeln verschlossen und enthalten Sensoren 7, von denen jeweils ein Kabel 8 durch die Bohrung 3, den Querkanal 4 und den zentrischen Kanal 5 nach außen geführt sind.

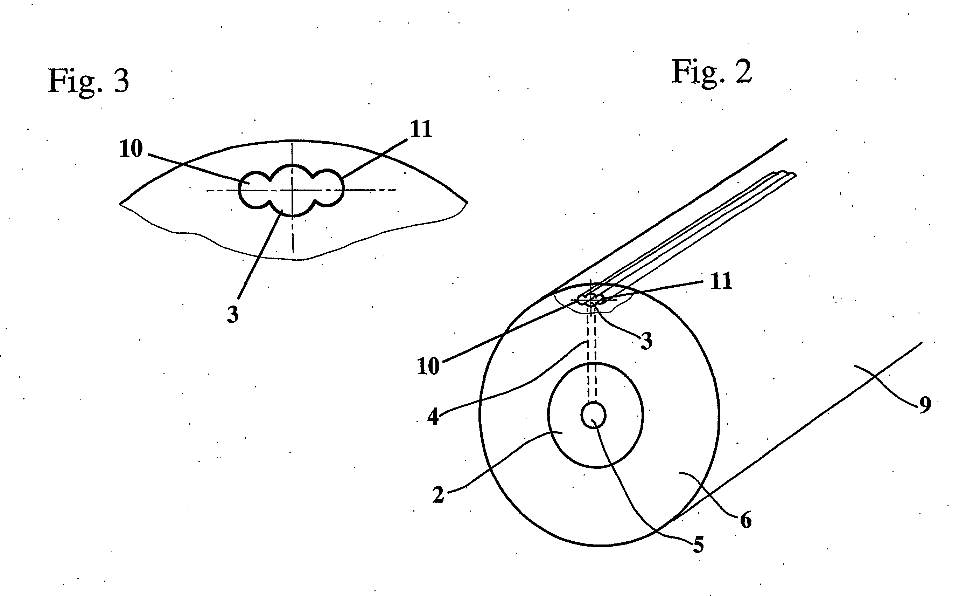

Die in den Fig. 2 und 3 schematisch-perspektivisch dargestellte Meßrolle 9 besitzt parallel zu jeder Bohrung 3 einander gegenüber liegende Kabelkanäle 10, 11 für über den Querkanal 4 und den zentrischen Kanal 5 nach außen geführte Leitungen.

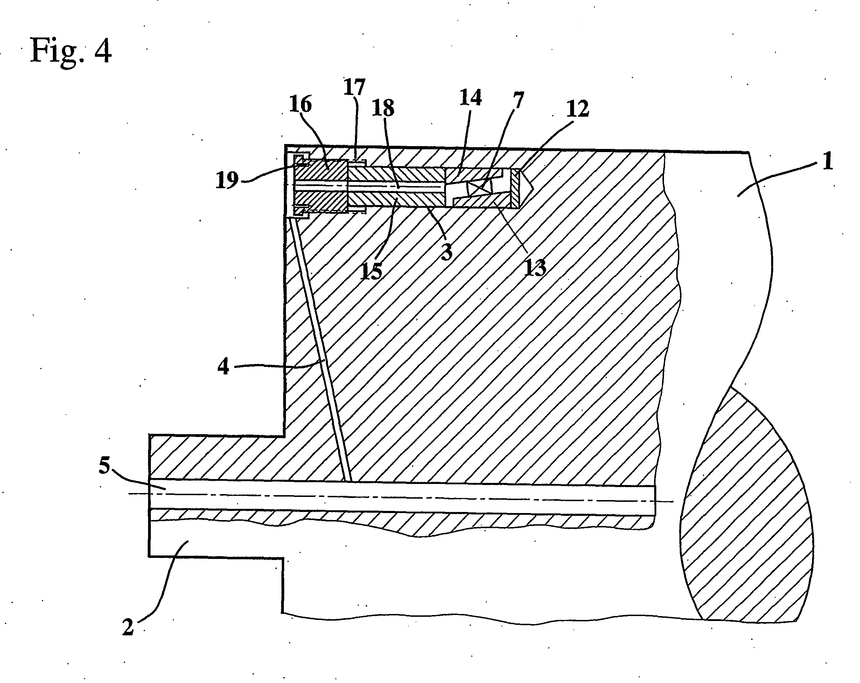

Bei der in Fig. 4 dargestellten Meßrolle 1 sind die Sensoren 7 in einer Bohrung 3 mit einer Stirnplatte 12 zwischen einem Haltestück in Gestalt eines ortsfesten Spannkeils 13 und einem in axialer Richtung verschiebbaren Haltestück in Gestalt eines Loskeils 14 angeordnet. An dem Loskeil 14 liegt eine Distanzhülse 15 an. Die Spannschraube 16 ist mit einem Außengewinde versehen, das im Innengewinde 17 der stufig aufgebohrten Bohrung 3 eingeschraubt ist. Sowohl die Distanzhülse als auch die Spannschraube besitzen zur Kabeldurchführung einen Kanal 18. Mit Hilfe eines am Kopf 19 der Spannschraube 16 angreifenden Schlüssels lassen sich die Distanzhülse 15 und der Loskeil 14 tiefer in die Bohrung 3 bewegen und dabei der Sensor 7 zwischen den beiden Keilen 13, 14 radial verspannen.

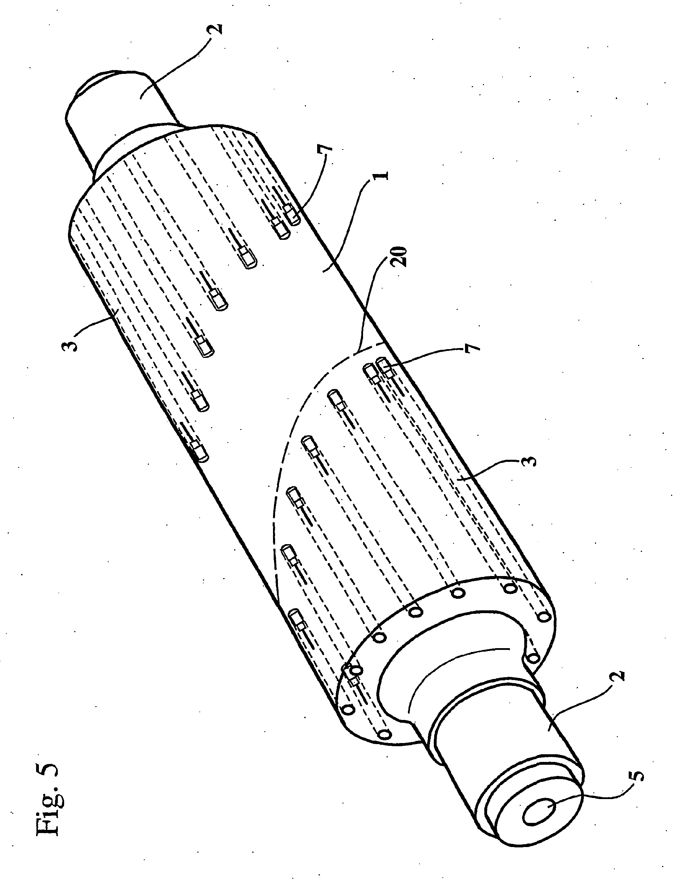

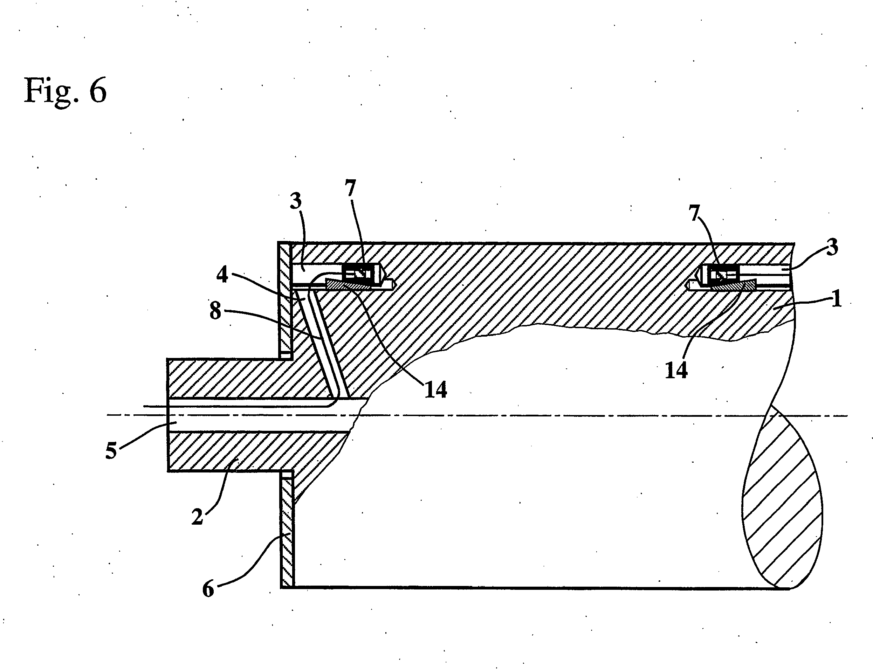

Die Bohrungen können, wie in den Fig. 5 und 6 dargestellt, von beiden Stirnseiten der Rolle 1 ausgehen und als Sackbohrungen eine unterschiedliche Tiefe besitzen. Das führt dazu, daß die einzelnen Sensoren längs einer Schraubenlinie 20, d.h. gestaffelt angeordnet sind und insgesamt die gesamte Breite der Rolle 1 erfassen.

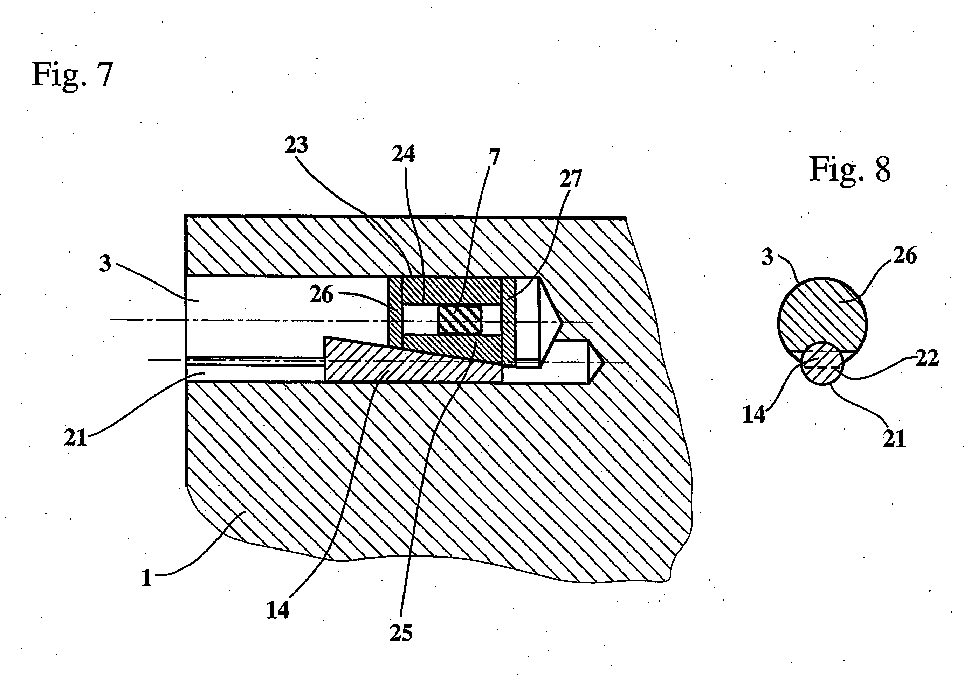

Die Bohrungen 3 können, wie in den Fig. 7, 8 dargestellt, auch mit einer Längsrille 21 verbunden sein, in denen der untere Teil 22 eines losen Spannkeils 14 geführt wird und dessen Schrägfläche mit einer Schrägfläche eines Gehäuses 23 zusammenwirkt. Beim radialen Verspannen des Gehäuses 23 mit dem in der Längsrille 21 geführten Spannkeil 14 wird sichergestellt, daß sich das Gehäuse 23 nicht in der Bohrung 3 verdrehen kann.

Bei der dargestellten Meßrolle 1 ist der Sensor 7 in einem vierteiligen Gehäuse 23 mit einander gegenüberliegenden parallelen Spannflächen 24, 25 und zwei Stirnplatten 26, 27 angeordnet.

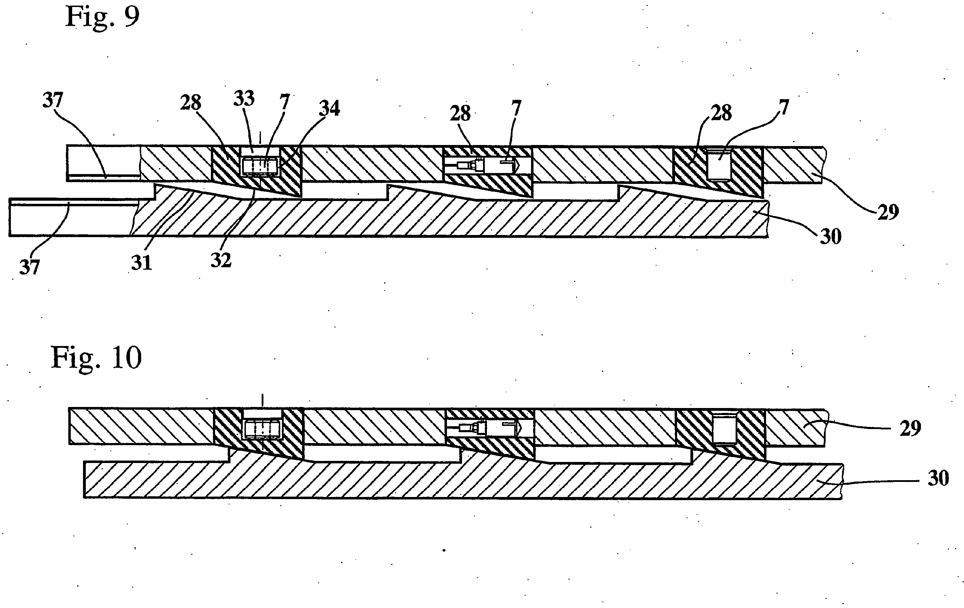

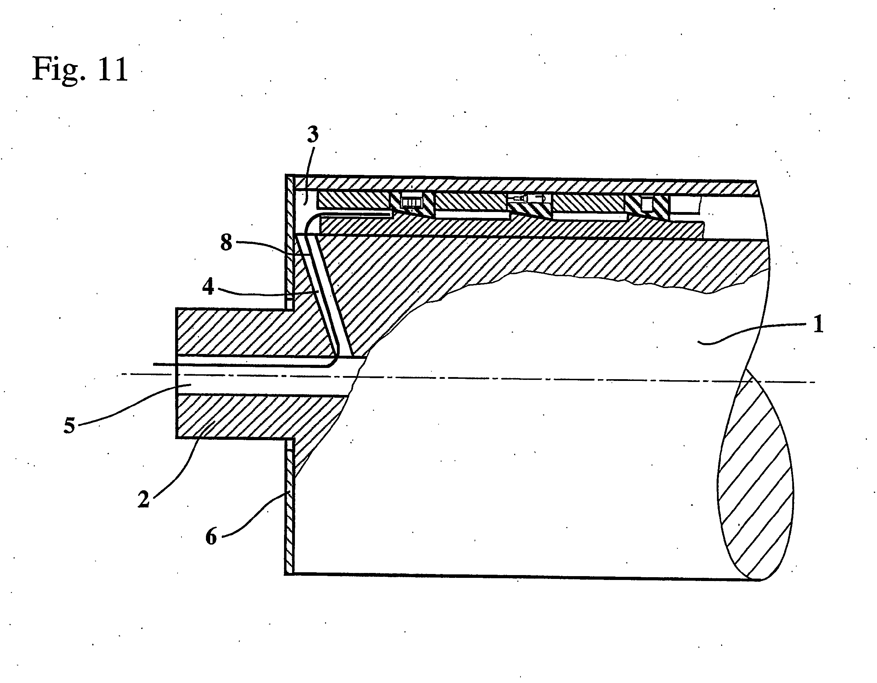

Die Sensoren 7 können auch in radial beweglichen Schiebestücken 28 einer Distanzleiste 29 angeordnet sein, die mit einer achsparallel verschiebbaren Spannleiste in Gestalt einer Keilleiste 30 zum radialen Verspannen der Schiebestücke 28 zusammenwirkt, wie das in den Figuren 9 bis 11 dargestellt ist. Während die Distanzleiste 29 in ihrer Bohrung 3 ortsfest angeordnet ist, dient die Keilleist dazu, mit ihren Keilflächen 31 im Zusammenwirken mit komplementären Schrägflächen 32 die Schiebestücke 28 radial nach außen zu bewegen und auf diese Weise die Schiebestücke 28 mit den darin unverrückbar angeordneten Sensoren 7 und deren Deckel 33 radial zu verspannen. Der Deckel 33 ist in eine Bohrung 34 des Schiebestücks 28 ohne Wandberührung geführt und besitzt an seiner Unterseite eine nicht dargestellte Ausnehmung, die den Kabelanschluß des Sensors aufnimmt.

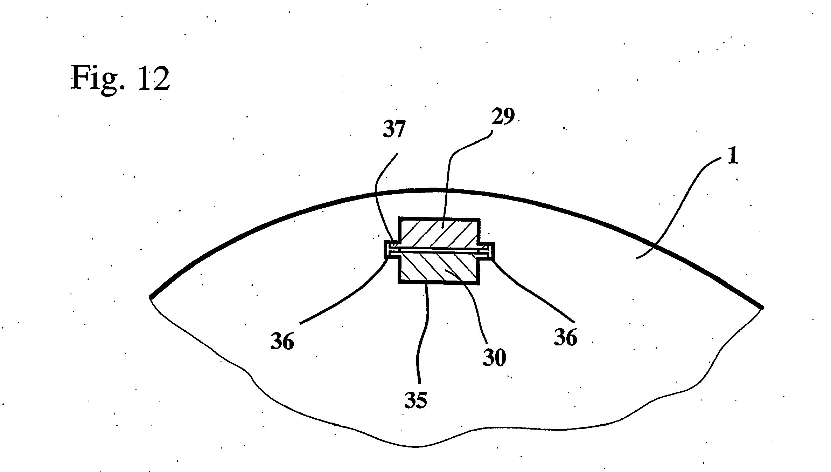

In Fig. 12 ist eine Meßrolle 1 mit einer im Querschnitt rechteckigen Längsausnehmung 35 dargestellt, die mit seitlichen Schlitzen 36 versehen ist. Diese Schlitze dienen dazu, den sich oberhalb der Längsausnehmung 35 für einen Sensor ergebenden Biegebalken zu verbreitern, um das elastische Verhalten des Biegebalkens zu verbessern. Die Schlitze können auch als Führung für Längsrippen am Sensor, an Haltestücken oder an Distanz- oder Spannleisten dienen und/oder sie können auch als Kabelkanäle dienen.

## Patentansprüche

1. Vollrolle zum Feststellen von Planheitsabweichungen beim Behandeln von bandförmigem Gut, insbesondere von Metallband, mit in Ausnehmungen angeordneten Sensoren (7), die axial zugänglich sind, **dadurch gekennzeichnet, dass** die Sensoren (7) in achsparallelen Bohrungen (3) angeordnet sind.

2. Vollrolle nach Anspruch 1, **dadurch gekennzeichnet, dass** die achsparallelen Bohrungen (3) von Stirnseite zu Stirnseite durchgehend verlaufen.

3. Vollrolle nach Anspruch 2, **dadurch gekennzeichnet, dass** die achsparallelen Bohrungen (3) eine unterschiedliche Länge besitzen.

4. Vollrolle nach einem der Ansprüche 1 bis 3, **dadurch gekennzeichnet, dass** mehrere Sensoren (7) in den Bohrungen (3) verkeilt sind.

5. Vollrolle nach einem der Ansprüche 1 bis 4, **dadurch gekennzeichnet, dass** die Sensoren (7) in den Bohrungen (3) verkeilt sind.

6. Vollrolle nach Anspruch 5, **dadurch gekennzeichnet, dass** Sensoren (7) mit planparallelen Flächen zwischen zwei Haltestücken (13, 14) angeordnet sind.

7. Vollrolle nach Anspruch 6, **dadurch gekennzeichnet, dass** die planparallelen Flächen der Sensoren (7) parallel zur Rollenachse verlaufen.

8. Vollrolle nach Anspruch 4 oder 5, **dadurch gekennzeichnet, dass** die Sensoren (7) in radial beweglichen Schiebestücken (28) einer Distanzleiste (29) angeordnet und mit Hilfe einer Spannleiste (30) in der Bohrung (3) fixiert sind.

9. Vollrolle nach Anspruch 8, **dadurch gekennzeichnet, dass** die Distanzleiste (29) und/oder die Spannleiste (30) mit einer in einen komplementären Führungsschlitz (36) eingreifenden Längsrippe (37) versehen ist.

10. Vollrolle nach einem der Ansprüche 1 bis 9, **dadurch gekennzeichnet, dass** die Bohrungen (3) mit einem parallel verlaufenden Kanal (10, 11) verbunden sind.

11. Vollrolle nach einem der Ansprüche 1 bis 10, **dadurch gekennzeichnet, dass** die Bohrungen (3) durch einen Querkanal (4)mit einer zentrischen Kabelbohrung (5) verbunden sind.

12. Vollrolle nach einem der Ansprüche 1 bis 11, **dadurch gekennzeichnet, dass** die Bohrungen (3) stirnseitig mit einem Deckel (6) verschlossen sind.

13. Vollrolle nach einem der Ansprüche 1 bis 12, **dadurch gekennzeichnet, dass** die Sensoren (7) in einem mehrteiligen Gehäuse (23) angeordnet sind.

## Claims

1. Solid roll for establishing flatness deviations when treating strip material, particularly metal strip, with sensors (7) arranged in recesses, which sensors (7) are axially accessible, **characterised in that** the sensors (7) are arranged in bores (3) parallel to the axis of the roll.

2. Solid roll according to Claim 1, **characterised in that** the bores (3) parallel to the axis of the roll extend continuously from one end face to the other end face.

3. Solid roll according to Claim 2, **characterised in that** the bores (3) parallel to the axis of the roll vary in length.

4. Solid roll according to any one of Claims 1 to 3, **characterised in that** a plurality of sensors (7) are wedged in the bores (3).

5. Solid roll according to any one of Claims 1 to 4, **characterised in that** the sensors (7) are wedged in the bores (3).

6. Solid roll according to Claim 5, **characterised in that** sensors (7) having mutually parallel faces are arranged between two holding pieces (13, 14).

7. Solid roll according to Claim 6, **characterised in that** the mutually parallel faces of the sensors (7) extend parallel to the axis of the roll.

8. Solid roll according to Claim 4 or 5, **characterised in that** the sensors (7) are arranged in radially movable sliders (28) in a spacer strip (29) and are fixed in the bore (3) by means of a clamping strip (30).

9. Solid roll according to Claim 8, **characterised in that** the spacer strip (29) and/or the clamping strip (30) is/are provided with a longitudinal rib (37) engaging in a complementary guide slot (36).

10. Solid roll according to any one of Claims 1 to 9, **characterised in that** the bores (3) are connected to a passage (10, 11) which runs parallel to them.

11. Solid roll according to any one of Claims 1 to 10, **characterised in that** the bores (3) are connected by a transverse passage (4) to a central bore (5) for cables.

12. Solid roll according to any one of Claims 1 to 11, **characterised in that** the bores (3) are sealed at the front with a cover (6).

13. Solid roll according to any one of Claims 1 to 12, **characterised in that** the sensors (7) are arranged in a multi-part housing (23).

## Revendications

1. Rouleau plein pour déterminer des écarts de planéité lors du traitement de produit en forme de bande, notamment de feuillard métallique, avec des capteurs (7) qui sont disposés dans des évidements et qui sont axialement accessibles, **caractérisé en ce que** les capteurs (7) sont disposés dans des perçages (3) parallèles à l'axe.

2. Rouleau plein selon la revendication 1, **caractérisé en ce que** les perçages (3) parallèles à l'axe s'étendent continûment d'un côté frontal à l'autre.

3. Rouleau plein selon la revendication 2, **caractérisé en ce que** les perçages (3) parallèles à l'axe ont des longueurs différentes.

4. Rouleau plein selon l'une des revendications 1 à 3, **caractérisé en ce que** plusieurs capteurs (7) sont coincés dans les perçages (3).

5. Rouleau plein selon l'une des revendications 1 à 4, **caractérisé en ce que** les capteurs (7) sont coincés dans les perçages (3).

6. Rouleau plein selon la revendication 5, **caractérisé en ce que** des capteurs (7) à faces planes et parallèles sont disposés entre deux pièces de maintien (13, 14).

7. Rouleau plein selon la revendication 6, **caractérisé en ce que** les faces planes et parallèles des capteurs (7) s'étendent parallèlement à l'axe du rouleau.

8. Rouleau plein selon la revendication 4 ou 5, **caractérisé en ce que** les capteurs (7) sont disposés dans des pièces coulissantes (28) radialement mobiles d'une réglette d'écartement (29) et sont immobilisés dans le perçage (3) à l'aide d'une réglette de serrage (30).

9. Rouleau plein selon la revendication 8, **caractérisé en ce que** la réglette d'écartement (29) et/ou la réglette de serrage (30) est pourvue d'une nervure longitudinale (37) s'engageant dans une fente longitudinale complémentaire (36).

10. Rouleau plein selon l'une des revendications 1 à 9, **caractérisé en ce que** les perçages (3) sont reliés à un canal (10, 11) s'étendant parallèlement.

11. Rouleau plein selon l'une des revendications 1 à 10, **caractérisé en ce que** les perçages (3) sont reliés par un canal transversal (4) à un perçage central pour câble (5).

12. Rouleau plein selon l'une des revendications 1 à 11, **caractérisé en ce que** les perçages (3) sont fermés du côté frontal par un couvercle (6).

13. Rouleau plein selon l'une des revendications 1 à 12, **caractérisé en ce que** les capteurs (7) sont disposés dans un boîtier (23) en plusieurs parties.
